(19) Europäisches Patentamt
European Patent Office
Office européen des brevets

(11) **EP 0 898 671 B1**

(12) **EUROPÄISCHE PATENTSCHRIFT**

(45) Veröffentlichungstag und Bekanntmachung des Hinweises auf die Patenterteilung:
**12.04.2000 Patentblatt 2000/15**

(51) Int Cl.⁷: **F16H 61/20**, G05B 13/04

(21) Anmeldenummer: 97924954.7

(86) Internationale Anmeldenummer:
**PCT/EP97/02542**

(22) Anmeldetag: **17.05.1997**

(87) Internationale Veröffentlichungsnummer:
**WO 97/44600 (27.11.1997 Gazette 1997/51)**

(54) **REGELUNG ZUR KRIECHNEIGUNGSMINDERUNG EINES KRAFTFAHRZEUGES**

CONTROL SYSTEM TO REDUCE THE TENDENCY OF A MOTOR VEHICLE TO CREEP

SYSTEME DE REGULATION POUR REDUIRE LA TENDANCE A L'AVANCE EXTRA-LENTE D'UN VEHICULE A MOTEUR

(84) Benannte Vertragsstaaten:
**DE FR GB**

(30) Priorität: **21.05.1996 DE 19620329**

(43) Veröffentlichungstag der Anmeldung:
**03.03.1999 Patentblatt 1999/09**

(73) Patentinhaber: **ZF-Batavia, L.L.C.**
**Plymouth, Michigan 48170-2456 (US)**

(72) Erfinder:
• **KNAPP, Thomas**
**D-63791 Karlstein (DE)**
• **DANZ, Wolfgang**
**D-88046 Friedrichshafen (DE)**

(74) Vertreter: **Zietlow, Karl-Peter**
**ZF FRIEDRICHSHAFEN AG**
**88038 Friedrichshafen (DE)**

(56) Entgegenhaltungen:
| | |
|---|---|
| **EP-A- 0 492 199** | **EP-A- 0 644 361** |
| **DE-A- 2 752 706** | **DE-A- 4 235 827** |
| **DE-A- 4 241 171** | **DE-A- 19 520 579** |
| **US-A- 4 799 158** | **US-A- 4 898 049** |

**Beschreibung**

Die Erfindung befaßt sich mit einer Regelung zur Kriechneigungsminderung eines Kraftfahrzeuges nach dem Oberbegriff von Anspruch 1.

Bei einem Kraftfahrzeug mit Automatgetriebe mit hydrodynamischen Wandler 5 überträgt dieser bei geschaltetem Gang auch bei Motorleerlauf genügend Drehmoment, daß ein ungebremstes Fahrzeug anrollt. Dieses sogenannte Kriechen ist nicht von allen Fahrzeugherstellern erwünscht und soll auf ein verträgliches Maß gemindert werden. Die Kriechneigung kann gemindert werden, indem die Anpreßkraft einer Kupplung im Antriebsstrang des Kraftfahrzeuges verringert wird, da durch Kupplungsschlupf das übertragene Moment abnimmt. Diese Kupplung kann z. B. eine Schaltkupplung sein. Wird dagegen das Kriechen durch Festbremsen verhindert, so führt die im Wandler vernichtete Leistung zu einem Abfall der Leerlaufdrehzahl des Motors. Bei Motoren mit geregelter Einspritzpumpe führt diese dem Motor mehr Treibstoff zu, sodaß dieser trotz der Drehmomentbelastung durch das Wandlerpumpenrad die gewünschte Leerlaufdrehzahl halten kann. Dies führt allerdings zu einem höheren Treibstoffverbrauch. Die Verringerung des von der Reibungskupplung übertragenen Moments durch Kupplungsschlupf ist die wirtschaftlichere Lösung der Kriechneigungsminderung.

Solche Regelungen sind bekannt, die deutsche Offenlegungsschrift DE 42 41 171 A beschreibt eine Art einer Regelung einer Reibungskupplung. Dabei wird die Kraft auf die Reibbeläge oder -lamellen, und damit die Drehmomentübertragung mit einer bestimmten Funktion hochgefahren. Die Kupplungskraft wird dabei nach dem Verhältnis aus Getriebeeingangsdrehzahl zu Getriebeausgangsdrehzahl gesteigert. Diese Art von Regelungen müssen aber für verschiedene Motoren und Wandler einzeln abgestimmt werden.

Der Erfindung liegt die Aufgabe zugrunde, eine Regelung für die Kriechneigungsminderung zu schaffen, die leicht abzustimmen ist und in erster Näherung unabhängig von der verwendeten Kupplungsgeometrie und des verwendeten Wandlers ist.

Diese Aufgabe wird mit einer, auch die kennzeichnenden Merkmale des Hauptanspruches aufweisenden gattungsgemäßen Regelung gelöst.

Zur Kriechneigungsminderung wird die Kraft auf die Reibungskupplung soweit zurückgenommen, daß die Reibungskraft zwischen Primär- und Sekundärseite der Reibungskupplung so gering ist, daß die Kupplung schlupft, und dadurch das übertragene Moment niedriger ist als bei geschlossener Kupplung, und somit die Neigung des Kraftfahrzeuges zum Kriechen vermindert ist. Die modellbasierte Regelung zur Kriechneigungsminderung bietet den Vorteil, daß nichtlineare Effekte und Störgrößen im Regelkonzept berücksichtigt werden. Die Abstimmung wird dadurch wesentlich vereinfacht, insbesondere bei Fahrzeug- und Getriebevarianten.

In einer vorteilhaften Ausgestaltung der Erfindung gilt für das Modell zur Kriechneigungsminderung folgendes gekoppelte Differentialgleichungssystem:

$$d\omega\_motor/dt = 1/\Theta\_motor \cdot [M\_motor - M\_verbraucher - M\_p], \qquad (1)$$

$$d\omega\_turb/dt = 1/\Theta\_turb \cdot [M\_turb - M\_k], \qquad (2)$$

mit:

| | |
|---|---|
| $\omega$\_motor | Winkelgeschwindigkeit des Motors, |
| t | Zeit, |
| $\Theta$\_motor | Trägheitsmoment von Motor, Wandlerpumpenrad und Verbindungswellen, |
| M\_motor | Drehmoment des Motors, |
| M\_verbr | Drehmoment der Nebenaggregat-Verbraucher, |
| M\_p | Drehmoment des Wandlerpumpenrades, |
| $\omega$\_turb | Winkelgeschwindigkeit des Wandlerturbinenrades, |
| $\Theta$\_turb | Trägheitsmoment von Wandler-Turbine, Kupplungs eingangsseite und Verbindungswellen |
| M\_turb | Drehmoment des Wandlerturbinenrades, |
| M\_k | Drehmoment der Reibungskupplung, |

wobei die Kopplung der Differentialgleichungen durch die Wandlerkennlinie $\mu$ über die Beziehung

$$M\_turb = \mu \cdot M\_p = \mu(\nu) \cdot M\_p \qquad (3)$$

gegeben ist.
Dabei ist M_p seinerseits durch die Beziehung

$$M\_p = M\_p, \text{ref}(\nu) \cdot \omega^2\_\text{motor}/\omega^2\_\text{ref} \tag{4}$$

gegeben.
$\omega$_ref ist dabei die Winkelgeschwindigkeit, bei der die Wandlerkennlinien $\mu(\nu)$ und M_p,ref($\nu$) vermessen werden. $\nu$ ist das Drehzahlverhältnis: $\nu = \omega$_turb/$\omega$_motor.

Bei einer konventionellen Lamellenkupplung wird das Drehmoment M_k der Reibungskupplung über die Beziehung

$$M\_k = \mu\_\text{reib} \cdot r \cdot z \cdot [A \cdot p\_k - F\_\varnothing] \tag{5}$$

ermittelt,
mit :

M_k          Drehmoment der Reibungskupplung,
$\mu$_reib      Reibungskoeffizent der Reibungskupplung,
r              effektiver Reibradius,
z              Anzahl der Reibflächen,
A              Kolbenfläche des Betätigungszylinders der Rei bungskupplung,
p_k            Druck im Betätigungszylinder der Reibungskuppllung,
F_$\varnothing$          Minimalkraft zur Drehmomentübertragung.

Diese Gleichung ist abhängig vom mechanischen Aufbau der Kupplung und muß bei Bedarf den technischen Gegebenheiten angepaßt werden.

Der Druck p_k im Betätigungszylinder der Reibungskupplung wird vorteilhaft durch ein Druckregelventil eingestellt, das über den Strom durch seine Magnetspule angesteuert wird. Die Abhängigkeit des Drucks p_k vom Spulenstrom I_k folgt einem bestimmten funktionalen Zusammenhang

$$p\_k = f(I\_k) \tag{6},$$

der in einer Kennlinie abgelegt ist.

Diese Gleichungen (1) - (6) werden nun im modellbasierten Regelkonzept eingearbeitet. Grundidee hierbei ist, anhand von Gleichung (2) das Kupplungsmoment M_k zu berechnen, welches einen gewünschten Gradienten der Turbine d$\omega$_turb, soll/dt einstellt. Das hierfür notwendige Kupplungsmoment wird mit M_k,soll bezeichnet.

Man erhält:

$$M\_k, \text{soll} = M\_\text{turb}^* - \Theta\_\text{turb} \cdot d\omega\_\text{turb}, \text{soll}/dt \tag{7}$$

mit M_turb[*] dem berechneten Turbinenmoment aus dem im Rechner abgelegten Kennlinien. Ist dieses Kupplungsmoment bekannt, so kann der hierzu notwendige KupRlungssolldruck p_k,soll
und Sollstrom I_k,soll berechnet werden.

$$p\_k, \text{soll} = M\_k, \text{soll} /(\mu\_\text{reib} \cdot r \cdot z \cdot A) + F\_\varnothing/A \tag{8}$$

$$I\_k, \text{soll} = f^{-1} (p\_k, \text{soll}) \tag{9}$$

Der Vorteil dieser modellbasierten Regelung ist, daß durch die Kenntnis des Einflusses der Störgröße M_turb auf die Regelstrecke ein Korrekturglied eingefügt wird, das die funktionale Abhängigkeit der Regelgröße von der Störgröße, d. h. das Verhalten der Regelstrecke in Reaktion auf die Störgröße berücksichtigt, sodaß die Abhängigkeit der Regelgröße von der Störgröße durch diese vorgeschaltete Korrekur minimiert wird. Zudem können vorhandene Nichtlinearitäten, z. B. Reibungskoeffizient, Druck-Strom-Kennlinie (6) eliminiert werden. Das System, bestehend aus Korrekturglied und Regelstrecke stellt damit eine nahezu lineare Ersatz-Regelstrecke dar.

In einer vorteilhaften Ausgestaltung der Erfindung wird der Turbinensollgradient $d\omega\_turb,soll/dt$ von einem Proportional-Integral-Differential-Regler eingestellt. Dieser Regler berechnet aus der aktuellen Turbinendrehzahl $\omega\_turb,ist$ und der Solldrehzahl $\omega\_turb,soll$ den Sollgradienten $d\omega\_turb,soll/dt$, welcher Eingangsgröße in ein Korrekturglied ist. Der Sollwert $\omega\_turb,soll$ ist für Kriechneigungsminderung geringer als die Motorwinkelgeschwindigkeit: $\omega\_turb,soll = \omega\_motor - \Delta$, wobei $\Delta$ ein abstimmbarer Parameter ist.

Durch Gleichsetzen des Sollwertes $\omega\_turb,soll$ mit der Getriebeeingangsdrehzahl kann ein geregeltes Schließen der Kupplung realisiert werden.

In einer Zeichnung ist eine Ausgestaltung der Erfindung dargestellt.

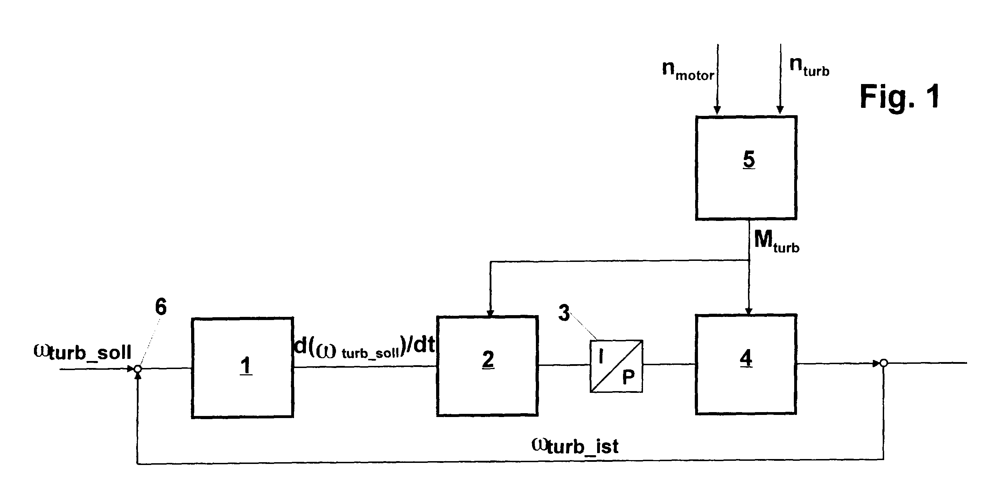

Es zeigt Fig. 1 einen Regelkreis zur Kriechneigungsminderung.

Ein Regler 1 regelt über ein Korrekturglied 2 und einen Strom-Druck-Wandler 3 als Regelstrecke 4 eine Kupplung, in die als Störgröße das Turbinendrehmoment $M\_turb$ eines hydrodynamischen Wandlers 5 eingeht. Eingangsgrößen des Regelkreises sind als Führungsgröße der Sollwert der Winkelgeschwindigkeit der Wandlerturbine $\omega\_turb,soll$ und die berechnete Störgröße Turbinendrehmoment $M\_turb^{*}$. Ausgangsgröße des Regelkreises ist der Istwert der Winkelgeschwindigkeit der Wandlerturbine $\omega\_turb,ist$. Dieser Istwert wird mit der Führungsgröße $\omega\_turb,soll$ am Summationspunkt 6 verglichen. Der Vergleich ergibt die Regelabweichung, die Eingangsgröße des Reglers 1 ist. Dessen Ausganggröße ist der Sollwert der zeitlichen Ableitung der Winkelgeschwindigkeit der Wandlerturbine $d(\omega\_turb,soll)/dt$, der wiederum Eingangsgröße in das Korrekturglied 2 ist. Das Korrekturglied 2 berücksichtigt die funktionale Abhängigkeit der Regelgröße von der Störgröße, d. h. das Verhalten der Regelstrecke 4 in Reaktion auf die Störgröße, sodaß die komplexe Abhängigkeit der Regelgröße von der Störgröße durch diese vorgeschaltete Korrekur kompensiert wird. Ausgangsgröße des Korrekturglieds 2 ist ein Stromwert, der von dem Strom-Druck-Wandler 3 in einen Druckwert umgesetzt wird. Dieser Strom-Druck-Wandler 3 ist üblicherweise ein elektromagnetischer Druckregler. Dieser Druckwert ist Eingangsgröße in die Regelstrecke 4. Ausgangsgröße der Regelstrecke 4 ist der Istwert der Winkelgeschwindigkeit der Wandlerturbine $\omega\_turb,ist$. Das System aus Korrekturglied 2, Strom-Druck-Wandler 3 und Regelstrecke 4 bildet eine nahezu lineare Ersatz-Regelstrecke. Dies hat zum Vorteil, daß als Regler 1 ein leicht abstimmbarer Proportional-Integral-Differential-Regler verwendet werden kann, welcher in erster Näherung unabhängig von der verwendeten Kupplungsgeometrie und dem verwendeten Wandlers ist.

Bezugszeichen

1 Regler
2 Korrekturglied
3 Strom-Druck-Wandler
4 Regelstrecke
5 Wandler
6 Summationspunkt

**Patentansprüche**

1. Regelung zur Kriechneigungsminderung eines Kraftfahrzeuges mit Automatgetriebe mit hydrodynamischen Wandler (5) und Reibungskupplung, die das Kriechen eines Kraftfahrzeuges im Motor-Leerlauf bei geschaltetem Gang mindert, dadurch **gekennzeichnet,** daß die Kraft auf die Reibungskupplung soweit zurückgenommen wird, daß die Reibungskraft zwischen Primär- und Sekundärseite der Reibungskupplung so gering wird, daß die Kupplung schlupft, das übertragene Moment niedriger wird als bei geschlossener Kupplung und die Neigung des Kraftfahrzeuges zum Kriechen vermindert wird, wobei die Regelung einen modellbasierten Regelalgorithmus besitzt, in den die Drehzahlen vom Motor und vom Wandlerturbinenrad sowie das Trägheitsmoment von Motor, Wandlerpumpenrad und Verbindungswellen und das Trägheitsmoment von Wandler-Turbine, Kupplungseingangsseite und Verbindungswellen und das Drehmoment von Motor, Wandlerpumpenrad, Wandlerturbinenrad, Nebenaggregat-Verbraucher und Reibungskupplung sowie die Wandlerkennlinien als Parameter bzw. Eingangsgrößen eingehen.

2. Regelung nach Anspruch 1, dadurch **gekennzeichnet,** daß für die Eingangsgrößen in den modellbasierten Regelalgorithmus das gekoppelte Differentialgleichungssystem gilt:

$$d\omega\_motor/dt = 1/\Theta\_motor \cdot [M\_motor - M\_verbr - M\_p],$$

$$d\omega\_turb/dt = 1/\Theta\_turb \cdot [M\_turb - M\_k],$$

mit:

| | |
|---|---|
| $\omega\_motor$ | Winkelgeschwindigkeit des Motors, |
| t | Zeit, |
| $\Theta\_motor$ | Trägheitsmoment von Motor, Wandlerpumpenrad und Verbindungswellen, |
| $M\_motor$ | Drehmoment des Motors, |
| $M\_verbr$ | Drehmoment der Nebenaggregat-Verbraucher, |
| $M\_p$ | Drehmoment des Wandlerpumpenrades, |
| $\omega\_turb$ | Winkelgeschwindigkeit des Wandlerturbinenrades, |
| $\Theta\_turb$ | Trägheitsmoment von Wandler-Turbine, Kupplungseingangsseite und Verbindungswellen, |
| $M\_turb$ | Drehmoment des Wandlerturbinenrades, |
| $M\_k$ | Drehmoment der Reibungskupplung, |

wobei die Kopplung der Differentialgleichungen durch die Wandlerkennlinie μ über die Beziehung $M\_turb = \mu \cdot M\_p = \mu(\nu) \cdot M\_p$ gegeben ist, und diese Gleichungen in ein modellbasierten Regelkonzept eingearbeitet werden, wobei das Soll-Übertragungsdrehmoment der Reibungkupplung $M\_k,soll$ durch den der Sollwert der zeitlichen Ableitung der Winkelgeschwindigkeit der Wandlerturbine $d(\omega\_turb,soll)/dt$ über die Beziehung $M\_k,soll = M\_turb^* - \Theta\_turb \cdot d\omega\_turb,soll/dt$ bestimmt wird, wobei $M\_turb^*$ das berechneten Turbinenmoment aus dem im Rechner abgelegten Kennlinien ist.

3. Regelung nach Anspruch 2, dadurch **gekennzeichnet,** daß das Drehmoment der Wandlerpumpe $M\_p$ durch die Beziehung $M\_p = M\_p,ref(\nu) \cdot \omega^2\_motor/\omega^2\_ref$ bestimmt wird, wobei $\omega\_ref$ die Winkelgeschwindigkeit ist, bei der die Wandlerkennlinien $\mu(\nu)$ und $M\_p, ref(\nu)$ vermessen werden und ν das Drehzahlverhältnis: $\nu = \omega\_turb/\omega\_motor$ ist.

4. Regelung nach Anspruch 3, dadurch **gekennzeichnet,** daß die Reibungskupplung von einer Betätigungseinrichtung über ein Druckmittel mit Kraft beaufschlagt und der Sollwert des Drucks $p\_k,soll$ in der Betätigungseinrichtung über die Beziehung

$$p\_k,soll = M\_k,soll /(\mu\_reib \cdot r \cdot z \cdot A) + F\_\varnothing/A$$

bestimmt wird, mit:

| | |
|---|---|
| $M\_k$ | Drehmoment der Reibungskupplung, |
| $\mu\_reib$ | Reibungskoeffizent der Reibungskupplung, |
| r | effektiver Reibradius, |
| z | Anzahl der Reibflächen, |
| A | Kolbenfläche der Betätigungseinrichtung der Reibungskupplung, |
| $p\_k$ | Druck im der Betätigungseinrichtung der Reibungskupplung, |
| $F\_\varnothing$ | Minimalkraft zur Drehmomentübertragung. |

5. Regelung nach Anspruch 4, dadurch **gekennzeichnet,** daß der Druck $p\_k$ der Betätigungseinrichtung der Reibungskupplung durch ein Druckregelventil geregelt wird, das über den Strom durch seine Magnetspule angesteuert wird und die Abhängigkeit des Drucks $p\_k$ vom Spulenstrom $I\_k$, d. h. die Funktion $p\_k = f(I\_k)$ in einer Kennlinie abgelegt ist und aus dieser Kennlinie der Regel-Spulenstrom für das Magnetventil $I\_k,soll = f^{-1}(p\_k,soll)$ ermittelt wird.

6. Regelung nach Anspruch 1 oder 2, dadurch **gezeichnet,** daß der Turbinensollgradient $d\omega\_turb,soll/dt$ von einem Proportional-Integral-Differential-Regler eingestellt wird und dieser Regler (1) aus der aktuellen Turbinendrehzahl $\omega\_turb,ist$ und der Solldrehzahl $\omega\_turb,soll$ den Sollgradienten $d\omega\_turb,soll/dt$ berechnet, welcher Eingangsgröße in ein Korrekturglied (2) ist, wobei der Sollwert $\omega\_turb,soll$ für Kriechneigungsminderung geringer als die Motorwinkelgeschwindigkeit ist, so daß die Beziehung ω_turb,soll = ω_motor - Δ gilt, wobei Δ ein abstimmbarer Parameter ist.

7. Regelung nach Anspruch 1 oder 2, dadurch **gekennzeichnet,** daß durch Gleichsetzen des Sollwertes ω_turb,soll mit der Getriebeeingangsdrehzahl ein geregeltes Schließen der Kupplung realisiert wird.

**Claims**

1. Control system for reducing the creeping tendency of a motor vehicle having automatic transmission with a hydrodynamic converter (5) and friction clutch, which reduces the creeping of a motor vehicle when the engine is idling with a gear selected, characterized in that the force upon the friction clutch is withdrawn until the friction force between primary and secondary side of the friction clutch becomes so low that the clutch slips, the transmitted torque becomes lower than when the clutch is closed and the tendency to creep of the motor vehicle is reduced, wherein the control system has a model-based control algorithm, into which the rotational speeds of the engine and converter turbine wheel as well as the moment of inertia of engine, converter pump wheel and connecting shafts and the moment of inertia of converter turbine, clutch input side and connecting shafts and the torque of engine, converter pump wheel, converter turbine wheel, auxiliary equipment consumer and friction clutch as well as the converter characteristic curves are entered as parameters and/or input variables.

2. Control system according to claim 1, characterized in that for the input variables entered into the model-based control algorithm the simultaneous differential equation system applies:

$$d\omega\_motor/dt = 1/\theta\_motor \cdot [M\_motor-M\_verbr-M\_p],$$

$$d\omega\_turb/dt = 1/\theta\_turb \cdot [M\_turb-M\_k],$$

with:

ω_motor    angular velocity of the engine,
t    time,
θ_motor    moment of inertia of engine, converter pump wheel and connecting shafts,
M_motor    torque of the engine
M_verbr    torque of the auxiliary equipment consumers,
M_p    torque of converter pump wheel,
ω_turb    angular velocity of the converter turbine wheel,
θ_turb    moment of inertia of converter turbine, clutch input side and connecting shafts,
M_turb    torque of the converter turbine wheel,
M_k    torque of the friction clutch,

wherein the linking of the differential equations by the converter characteristic curve μ is effected via the relationship M_turb=μ·M_p =μ(ν)·M_p, and said equations are incorporated into a model-based control concept, wherein the setpoint transmission torque of the friction clutch M_k,soll is determined by the setpoint value of the time derivative of the angular velocity of the converter turbine d(ω_turb,soll)/dt via the relationship M_k,soll = M_turb.-θ_turb·dω_turb,soll/dt, in which M_turb· is the calculated turbine torque from the characteristic curves filed in the computer.

3. Control system according to claim 2, characterized in that the torque of the converter pump M_p is determined by the relationship M_p= M_p,ref(ν) · $\omega^2$_motor/$\omega^2$_ref, in which ω_ref is the angular velocity at which the converter characteristic curves μ(ν) and M_p,ref(ν) are measured and ν is the rotational speed ratio: ν = ω_turb/ω_motor.

4. Control system according to claim 3, characterized in that the friction clutch is loaded by an operating device with force via a pressure medium and the setpoint value of the pressure p_k,soll in the operating device is determined by the relationship

$$p\_k,soll = M\_k,soll / (\mu\_reib \cdot r \cdot z \cdot A) + F\_\varnothing/A, \text{ with:}$$

| | |
|---|---|
| M_k | torque of the friction clutch, |
| μ_reib | coefficient of friction of the friction clutch, |
| r | effective friction radius, |
| z | number of friction surfaces, |
| A | piston area of the operating device of the friction clutch, |
| p_k | pressure in the operating device of the friction clutch, |
| F_∅ | minimum force for torque transmission. |

5. Control system according to claim 4, characterized in that the pressure p_k of the operating device of the friction clutch is regulated by a pressure regulating valve, which is activated via the current through its magnet coil, and the dependence of the pressure p_k upon the coil current I_k, i.e. the function p_k = f(I_k) is filed in a characteristic curve and from said characteristic curve the control coil current for the solenoid valve I_k,soll = f$^{-1}$(p_k,soll) is determined.

6. Control system according to claim 1 or 2, characterized in that the turbine setpoint gradient dω_turb,soll/dt is adjusted by a proportional-plus-integral-plus-derivative controller and said controller (1) from the actual turbine rotational speed ω_turb,ist and the setpoint rotational speed ω_turb,soll calculates the setpoint gradient dω_turb,soll/dt, which is the input variable entered into a correction element (2), wherein the setpoint value ω_turb,soll for creeping tendency reduction is lower than the engine angular velocity so that the relationship ω_turb,soll = ω_motor - Δ applies, in which Δ is a tunable parameter.

7. Control system according to claim 1 or 2, characterized in that by equating the setpoint value ω_turb,soll with the transmission input rotational speed a controlled closing of the clutch is realized.

**Revendications**

1. Système de régulation pour réduire la tendance au rampement d'un véhicule à moteur comportant une boîte automatique avec convertisseur hydrodynamique (5) et embrayage à friction, qui diminue le rampement d'un véhicule lorsque le moteur est au ralenti et lorsqu'une vitesse est enclenchée, **caractérisé en ce que** la force appliquée sur l'embrayage à friction est réduite au point que la force de friction entre le côté primaire et le côté secondaire de l'embrayage à friction est tellement faible que l'embrayage patine, en ce que le moment transmis devient inférieur à ce qu'il est lorsque l'embrayage est fermé, et en ce que la tendance du véhicule au rampement est réduite, dans lequel la régulation est basée sur un modèle constitué d'un algorithme de régulation dans lequel la vitesse de rotation du moteur et de la roue de la turbine du convertisseur, ainsi que le moment d'inertie du moteur, de la roue de la pompe du convertisseur et des arbres de liaison ainsi que le moment d'inertie de la turbine du convertisseur, le côté d'entrée de l'embrayage et les arbres de liaison, et le couple du moteur, de la roue de la pompe du convertisseur, de la roue de la turbine du convertisseur, d'utilisateurs agrégats auxiliaires et de l'embrayage à friction ainsi que les courbes caractéristiques du convertisseur, sont entrés comme paramètres, respectivement comme grandeurs d'entrées.

2. Système de régulation selon la revendication 1, **caractérisé en ce que,** pour les grandeurs d'entrée du modèle d'algorithme de régulation, le système d'équations différentielles combinées suivant est valable :

$$d\omega\_motor / dt = 1 / \Theta\_motor^{\cdot} [M\_motor - M\_verbr - M\_p],$$

$$d\omega\_turb / dt = 1 / \Theta\_turb^{\cdot} [M\_turb - M\_k],$$

où :

| | |
|---|---|
| ω_motor | représente la vitesse angulaire du moteur, |
| t | le temps, |
| Θ_motor | le moment d'inertie du moteur, de la roue de la pompe du convertisseur et des arbres de liaison, |

M_motor     le couple du moteur,

M_verbr     le couple de l'utilisateur d'agrégat auxiliaire,

M_p         le couple de la roue de la pompe du convertisseur,

$\omega$_turb     la vitesse angulaire de la roue de la turbine du convertisseur,

$\Theta$_turb     le moment d'inertie de la turbine du convertisseur, du côté entrée de l'embrayage et des arbres de liaison,

M_turb     le couple de la roue de turbine du convertisseur,

M_k        le couple de l'embrayage à friction,

dans lequel la combinaison des équations différentielles avec la courbe caractéristique $\mu$ est donnée par la relation M_turb=$\mu$ M_p =$\mu$ ($\nu$)· M_p, et en ce que ces équations sont introduites dans un concept de régulation basé sur un modèle, dans lequel le couple de transmission de consigne de l'embrayage à friction M_k,soll est déterminé par la valeur de consigne de la dérivée par rapport au temps de la vitesse angulaire de la turbine du convertisseur d($\omega$_turb,soll)/dt par l'intermédiaire de la relation M_k,soll = M_turb\* - $\Theta$_turb· d$\omega$_turb,soll/dt, dans laquelle M_turb\* correspond à la valeur calculée du couple de la turbine à partir des courbes caractéristiques introduites dans le calculateur.

3. Système de régulation selon le revendication 2, caractérisé en ce que le couple de la pompe du convertisseur M_p est déterminé par la relation M_p = M_p,ref ($\nu$) $\omega^2$_motor /$\omega^2$_ref dans laquelle $\omega$_ref est la vitesse angulaire pour laquelle on mesure les courbes caractéristiques $\mu$($\nu$) du convertisseur et M_p,ref($\nu$) et dans laquelle $\nu$ est déterminé par la relation : $\nu$ = $\omega$_turb / $\omega$_motor.

4. Système de régulation selon la revendication 3, caractérisé en ce que l'embrayage à friction est activé par une installation d'activation par l'intermédiaire d'un fluide sous pression, et en ce que la valeur de consigne de la pression p_k,soll est déterminée dans l'installation d'actionnement par la relation

$$p\_k,soll = M\_k,soll / (\mu\_reib \cdot rz \cdot A) + F\_\varnothing/A$$

où :

M_k        représente le couple de l'embrayage à friction,

$\mu$_reib     le coefficient de frottement de l'embrayage à friction,

r           le rayon de friction effectif,

z           le nombre de surfaces de friction,

A          la surface de piston de l'installation d'activation de l'embrayage à friction,

p_k        la pression de l'installation d'activation de l'embrayage à friction,

F_$\varnothing$        la forme minimale de la transmission du couple moteur.

5. Système de régulation selon la revendication 4, caractérisé en ce que la pression, p_k de l'installation d'activation de l'embrayage à friction est réglée par une soupape de régulation de la pression, qui est pilotée par du courant électrique au moyen de sa bobine magnétique, et en ce que la relation entre la pression p_k et le courant de la bobine I_k, c'est-à-dire la fonction p_k = f (I_k) est donnée par une courbe caractéristique, et en ce que le courant de régulation de la soupape magnétique est déterminé au moyen de cette courbe caractéristique par la relation I_k,soll = f$^{-1}$ (p_k,soll).

6. Système de régulation selon la revendication 1 ou 2, caractérisé en ce que le gradient de consigne de la turbine d$\omega$_turb,soll/dt est réglé par un régulateur proportionnel intégral-différentiel, et en ce que ce régulateur (1) calcule, à partir de la vitesse de rotation effective de la turbine $\omega$_turb,ist et de la vitesse de consigne $\omega$_turb,soll/dt, le gradient de consigne d$\omega$_turb,soll/dt, dont la valeur d'entrée est introduite dans un organe de correction (2), dans lequel la valeur de consigne $\omega$_turb,soll pour réduire la tendance au rampement, est inférieure à la vitesse angulaire du moteur, de telle manière que la relation $\omega$_turb,soll = $\omega$_motor - $\Delta$, où $\Delta$ est un paramètre prédéterminé, soit valable.

7. Système de régulation selon la revendication 1 ou 2, caractérisé en ce que que l'on réalise un verrouillage réglé de l'embrayage par l'ajustement de la valeur $\omega$_turb,soll avec la vitesse de rotation angulaire de l'entrée de la boîte de vitesse.

## Fig. 1